# EUROPEAN PATENT APPLICATION

(11) **EP 4 095 058 A1**
(43) Date of publication of application: **30.11.2022**
(21) Application number: 21750185.7
(22) Date of filing: 19.01.2021
(51) Int. Cl.: B65D 30/02, B65D 33/01, B65D 33/02, B65D 33/04, B65D 33/34

(54) **BAG FOR HOLDING AND TRANSPORTING PRODUCTS, ESPECIALLY FRUIT AND VEGETABLE PRODUCE**

(30) Priority: 04.02.2020 ES 202030083
(71) Applicant: Cristóbal Meseguer, S.A., 30570 Beniaján Murcia (ES)
(72) Inventor: MESEGUER HUERTAS, José María, 30570 Beniaján (Murcia) (ES)
(74) Representative: Roeb Diaz-Alvarez, Maria
(86) International application number: PCT/ES2021/070026
(87) International publication number: WO 2021/156527

(57) **Abstract**

The present invention relates to a bag for holding and products, especially fruit and vegetable produce, which is obtained by dividing a tubular body obtained by folding a composite sheet (1) formed by paper bands or strips (2; 3, 3') extending longitudinally and alternately adjacent in a transverse direction. The adjacent bands or strips have on both sides respective overlay areas bonded by glue (4) and possibly by applying a respective strip of paper (5) that covers the overlay area. The bands or strips also include transverse glued portions (6) in longitudinal positions spaced apart, and they can further include windows (8) surrounded by perimeter gluing (9) and likewise covered by a mesh portion (8) made of paper and a reinforcement frame (10) also made of paper joined together by said perimeter gluing, the glues being biodegradable.

## Description

### Technical field of the invention

The present invention relates to a bag mainly designed to hold and transport certain products, especially fruit and vegetable produce, with the advantage over conventional bags that the use of plastic materials for manufacturing the same has been entirely or almost entirely eliminated, without losing features of resistance, reliability and handling with respect to known bags.

The technical field that the present invention belongs to is comprised within the industrial sector dedicated to providing bags for packaging products, mainly in the fruit and vegetable sector.

### Background of the invention

As is known, currently there is great concern worldwide about the need to reduce, in the most urgent and effective way possible, the consequences resulting from the use of the enormous amount of plastics now employed to manufacture multiple articles of common day-to-day use; plastics which are used sometimes as the only base material or other times combined with other materials, and of which a large portion, once they have fulfilled the purpose for which they were used, are not recycled properly with the consequent environmental damage that it entails. Thus, the uncontrolled dumping of these plastic materials results in increased environmental pollution that directly affects environmental habitats, especially land and crops that are produced, rivers, seas and also animals that populate these habitats, including human beings who live in various spaces where said waste is deposited or who, as the case may be, consume plant or animal products that have been affected by this uncontrolled dumping, as occurs, for example, with the consumption of vegetables, fish, or others. These residual materials are also the underlying basis of global warming, given that it is difficult for them to degrade naturally and no short-term solution is foreseen.

For all these reasons, it is easy to understand the need for plastic materials of this type to be both properly recycled and, preferably, replaced by others that are more environmentally friendly and do not have the direct or indirect consequences associated with plastic materials. As is known, one cause of the problem raised is the large number of bags that are used daily worldwide to transport and package a multiplicity of products, for consumption or otherwise, which are made from plastic materials. Of special interest are plastic bags used daily for packaging and transporting products such as fruit and vegetables, and more especially those intended for packaging potatoes and citrus fruits. In these applications, in an attempt to reduce the consequences of the problem raised, very thin plastics are being used to manufacture bags with a view to reduce the amount of plastic used as much as possible. However, even though the magnitude of the problem is partially reduced by adopting measures of this type, the fact is that the problem raised is not completely eliminated and continues to affect the environment in the manner already described, albeit to a lesser extent.

Spanish patent ES-2 356 876, from the same applicant, already proposed a type of bag for fruit and vegetable produce, obtained by using fragments or portions obtained by dividing a tubular body formed from a continuous band closed on itself, wherein medium-density polyethylene strips or bands are alternately combined with reticulated bioriented polypropylene bands, with a noticeable reduction in the amount of plastic materials used in the manufacturing process with respect to conventional bags.

Based on the foregoing, it is understood that it would be appropriate and necessary to find an effective solution relative to the manufacture of bags of this type, which resolves or at least significantly mitigates the problems that currently exist in terms of the use and recyclability of plastic materials used in the manufacture of bags for holding and transporting products, especially fruit and vegetable produce, and ideally, a solution that preferably allows for the complete or near complete replacement of the plastic materials used up until now by other materials that are not pollutants and therefore behave in a more environmentally friendly manner.

### Brief description of the invention

The present invention provides an effective solution to the aforementioned problems, and to this end it provides a bag for holding and transporting products, fruit and vegetable produce or products of another type, made of paper and with which it is possible to avoid the use of plastic materials by at least 95% compared to conventional bags for the same application. For this, the present invention starts with the aforementioned Patent ES-2 356 876, but with respect to this patent it has the following essential differences:
- the band or strip intended to have the graphic printing (reticulated closed band) is made of paper instead of plastic;
- the reticulated bands or meshes are made from cellulose or other textile material instead of plastic (for example, only paper thread or a combination of paper threads and other plant fibre threads, for example, bamboo threads since it is a natural waste product);
- the bands or strips closed or with a continuous surface (i.e., those that are not reticulated) are also made of paper;
- there is no need to use thermal welding between the reticulated meshes and/or the counter-sheets, but rather, since they are both made of paper or fabric, glue is used and they are bonded together by means of a gluing operation;
- the horizontal welding used in the prior art for closing the ends of the bag is replaced by a gluing operation, also with the aid of a suitable glue;
- also, the vertical joining that attaches the edges of the tube together when it is folded on itself to obtain the bag, as well as the bonding therebetween is also carried out with the help of a strip of glue, and
- the closed sheets comprise an inspection window which is also closed with the help of pieces of paper mesh.

As mentioned above, the reticulated bands or meshes used in the manufacture of the bag proposed by the present invention use cellulose-based materials, such as recycled paper threads used solely as such or advantageously combined with other plant fibres. As is known, the paper recycling process includes a milling operation by which the fibre of the paper to be recycled is shortened. In practice, during this recycling process, the recycling machines usually add some plant fibre to achieve better performance of the final product obtained, it being common for these plant fibres to consist of, for example, straw fibres. In the present invention, it has been envisaged that said plant fibres are specifically bamboo fibres since, according to the tests carried out, bamboo is a plant material with excellent performance in applications of this type, it is a naturally degradable material, and it also considerably improves the quality of the final product.

As will be understood, obtaining a bag in the manner indicated makes it possible to ensure the construction of substantially improved bags both in aspects related to their own performance and in relation to the disposal and recycling of the bags, since:
- Firstly, the paper bands do not need any waterproofing or other type of treatment;
- Secondly, as a consequence of the foregoing, since the paper bands are not treated in any way, they absorb the moisture of the packaged products (for example, potatoes, onions, citrus fruits, etc.), which ensures a considerable increase in the product shelf life (sometimes an increase of up to 100%), since the moisture is absorbed and dissipated by the fibres contained in the paper of the bands and also of the meshes, which also increases the drying surface and naturally prevents condensation that occurs in plastic bags and accelerates the rotting process.

From a structural point of view, taking into account the aspects that have just been explained, the bag is made from a composite-type sheet, which is made from reticulated bands or strips or meshes, which alternate with other closed (non-reticulated) bands or strips, which composite sheet is folded on itself to form a tubular body that can be divided into different positions to obtain individual bags, of a previously established size. Longitudinal joining (i.e., along each of the lateral edges) between adjoining bands or strips is carried out by applying a glue bead on a narrow longitudinal overlay area between adjacent reticulated and non-reticulated bands and, optionally, by applying a narrow strip of paper in such a way that when resting it on the overlay area of the reticulated strip or mesh, it is glued to the respective glued longitudinal edge of the corresponding closed strip or band. In this way, the glue penetrates through the holes in the reticulated band or mesh, and in the event the aforementioned narrow strip of paper is incorporated, the longitudinal reticulated band or mesh portion forms a firm joining with the corresponding longitudinal portion of the closed band. Similarly, the overlay areas between the outer bands of the composite sheet when the latter is closed to form the tubular body is also carried out by applying glue.

On the other hand, as mentioned previously, the incorporation of a strip of paper in the longitudinal overlay area between a reticulated band or mesh with a non-reticulated (closed) band may optionally include the addition of a strip of paper that covers this longitudinal overlay area and is adhered by means of the same glue that is applied to the overlay area. This optional embodiment provides the advantage that the joining between bands is more reinforced, and therefore, reinforcing the resistance of the material at the critical points of breakage has been envisaged for the case in which the bags are intended to hold somewhat heavier weights.

For the closure at both ends of the bags obtained by dividing the tubular body formed by folding the composite sheet, the application of transverse strips glued in the determined positions for dividing the tubular body has also been envisaged.

In the same way, the closed bands of the bags constructed in the manner described above can be optionally provided with windows that allow for the products contained inside the bag to be directly observed. For this, it has been envisaged that said closed bands can include windows, preferably quadrangular and of variable size and positioning, on which paper mesh portions are applied to close such windows, and the bonding attachment thereof to the surface surrounding each window is carried out with the help of a frame also made of paper, of a suitable size for the window on which it is located, and such that it is applied to the mesh portion itself with the use of glue to achieve the same effect of introducing the glue into the holes in the mesh and with it the integral joining between such elements.

According to the principles defined in the present invention to help reduce and/or eliminate waste that is harmful to the environment, at this point in the description it should be clarified that the glues used to form the bags described are biodegradable, for example, made from natural resins and collagens.

### Brief description of the drawings

These and other features and advantages of the invention will become more apparent from the detailed description of a preferred embodiment thereof that follows, which is given solely by way of illustration and not limitation and refers to the accompanying drawings, wherein:
Figure 1 is a schematic representation of an example of a composite sheet for the making of bags for holding and transporting products, together with a detail D1 that depicts the reticular aspect of the strip or mesh;
Figure 2 is an end elevation view of the composite sheet of Figure 1,
Figure 3 is a schematic example of a closed band or strip of the type used in the composite sheet of Figure 1, optionally provided with viewing windows in longitudinally distributed positions, and
Figure 4 is a schematic example of a closed band or strip like the one shown in Figure 3, provided with means applicable to the viewing windows, for closing and protecting the same.

### Description of a preferred embodiment

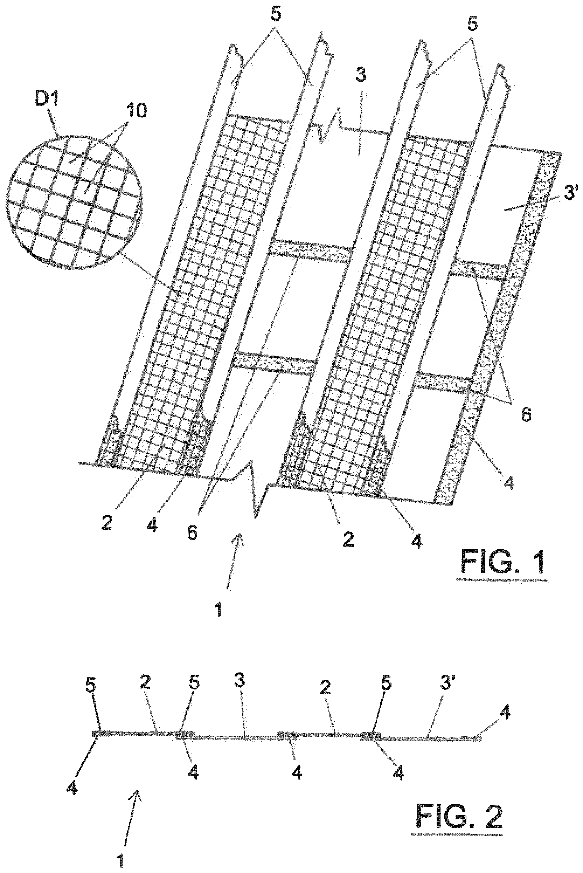

Figure 1 of the drawings depicts a schematic representation of an exemplary embodiment of a composite sheet for forming bags for holding and transporting products, where, despite having been defined for their special preferred use with fruit and vegetable produce, it should be understood that this use is not limiting and that the bag of the invention may be used with products of any type, provided that the weight and size thereof allow it.

The representation shown in Figure 1 shows that the composite sheet for making bags according to the invention has been generally indicated with the numerical reference 1 and it comprises several mutually adjacent bands or strips extending longitudinally, which include reticulated bands or meshes, indicated with the numerical reference 2 and which alternate in the transverse direction with other closed longitudinal bands 3, 3, i.e., bands having a continuous surface, without openings or non-reticulated in any way.

All the bands or strips mentioned, i.e., the reticulated bands or strips 2 or meshes and the closed or continuous bands 3, 3 are made of paper, with predetermined features of resistance and handling. For this reason, the joining between adjacent longitudinal bands is exempt from the use of any type of welding process or similar, and the bonding between bands or strips 2 with the adjacent bands or strips 3 thereof is carried out by gluing a longitudinal portion or area, for example, the glued portion indicated with reference 4 in Figure 1, located next to each edge of each of the closed bands or strips 3, 3, with overlay of such longitudinal portions of the adjacent bands. If desired, a narrow strip of paper, identified in the figure with the numerical reference 5, can be applied on the overlay area of the portions joined by gluing, such that since it is also made of paper, it remains joined to said overlay area by means of the glue that passes through the holes 10 of the reticulated band or mesh of only paper threads or of paper threads combined with other natural fibre threads (see detail D1), reinforcing the joining with a view to prevent easy or accidental separation of both adjacent bands or strips 2, 3, and providing the final bag with greater resistance to hold a greater weight.

As can also be seen in Figure 1, the composite sheet 1 includes other glued portions, arranged transversely in previously defined positions, such as those indicated by the numerical reference 6. These defined positions are spaced apart by separations of variable length depending on the size of the bag, since they correspond to the dividing or cutting area of the tubular body (not shown) obtained by folding the composite band 1, as defined in the aforementioned patent document ES-2356 876; although in the case of the present invention such glued portions may be located, as just mentioned, in different positions along the length of the composite sheet 1 depending on each bag to be manufactured.

Referring to Figure 2 of the drawings, an end elevation view of the composite sheet of Figure 1 can be seen. The representation of Figure 2, corresponding to the embodiment including the reinforcement strip of paper 5, clearly depicts the alternating positioning of the reticulated bands or strips 2 in the form of meshes with the closed bands or strips 3, 3 with a continuous surface, the overlay of the end longitudinal portions, on both sides, of every two consecutive bands or strips, the application of glue 4 along such overlay portions, and the final application of said strip of paper 5 on the glued areas for the indicated purposes.

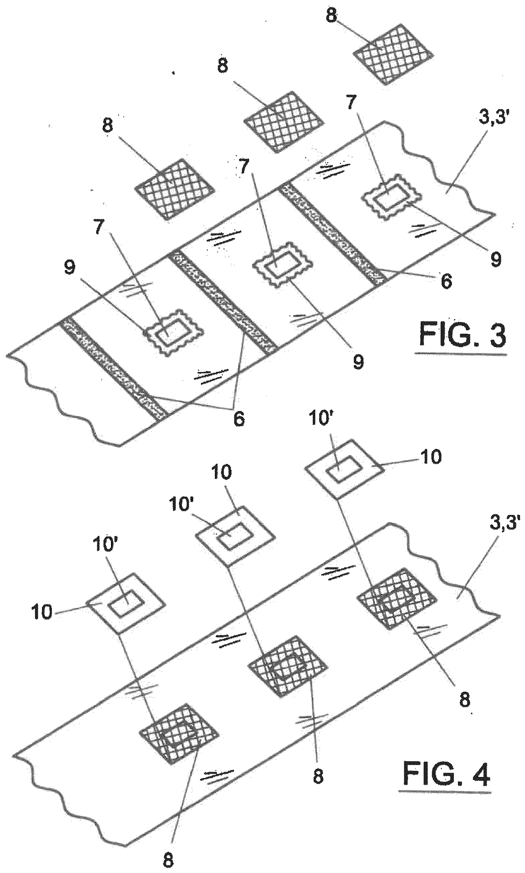

According to the preferred embodiments that have just been described, the surface of the outer face of each of the closed bands or strips 3, 3, with a continuous surface, provide ample space for the printing of marks, legends, graphics or any other type of information. Having this ample space for such prints is facilitated by the fact that the surface of the bands or strips 3, 3 are continuous, but in an optional embodiment, said bands or strips 3, 3 can also include inspection windows of the product held and transported inside the bag once said bag has been formed from the tubular body obtained by folding the composite sheet 1. This optional embodiment with windows made in the continuous bands or strips 3, 3 is shown in Figures 3 and 4 of the attached drawings.

Thus, first looking at Figure 3 of the drawings, a schematic representation of a closed band or strip is shown, such as those indicated with the numerical references 3, 3 in Figures 1 and 2, wherein said band or strip 3, 3 includes, in predetermined positions corresponding to each of the band divisions to be cut to make a respective bag, a window 7 generally, although not exclusively, with a quadrangular shape and pre-established size, there also being covering or closing elements for such windows 7 consisting of mesh portions 8, also made of paper fibres, larger in size than that of the windows and directly applicable on the same. Each of the windows 7 includes a glued perimeter area 9 such that the application of the mesh portions 8 made of paper fibres (or, where appropriate, made of paper fibres combined with other natural fibres), as represented in Figure 4, covering the entirety of the window 7 and the respective glued perimeter area 9 thereof, and the definitive attachment is carried out with the help of frame pieces 10, also made of paper, each of them provided with a central opening 10 with the same shape and size as that of the respective window to which it is applied, and intended to provide the definitive joining between each mesh portion 8 and the surface of the band or strip 3, 3 by virtue of gluing to the glued area 9 that surrounds each window, through the very holes or openings of the corresponding mesh portion 8.

As can be deduced from the foregoing, the invention enables bags for holding and transporting products, such as fruit and vegetable produce or products of another type, to be made, the manufacture of which does not use any type of plastic or other materials except for paper and glue for gluing and joining operations between components.

It should be clarified that references to paper as a material for manufacturing the bag also include fabrics, both terms being interchangeable throughout this description.

Additionally, it should also be understood that the bag described above allows for handles to be incorporated in a manner known per se, such that the description of this feature will be omitted for the sake of brevity.

### Industrial application

As can be seen from the preceding description of a preferred embodiment, the invention is particularly applicable in the industrial sector dedicated to the manufacture of bags, in particular bags for fruit and vegetable produce or other products, without the use of plastic materials.

It is not considered necessary to extend the contents of this description for a person skilled in the art to understand its scope and the advantages derived from it, as well as to carry out the practical embodiment of its object. Notwithstanding the foregoing, those skilled in the art will be able to understand and determine that within the essence of the invention, multiple variations in detail may be introduced, which may affect the shapes, dimensions and sizes, without thereby departing from the scope of the invention as defined by the attached claims.

## Claims

1. A bag for holding and transporting products, especially fruit and vegetable produce, as well as other products with weight and size suitable to the features of the bag, said bag being obtained by dividing a tubular body obtained by folding a composite sheet (1) which comprises reticulated bands or strips (2) or meshes and closed bands or strips (3, 3'), all of them extending along the longitudinal direction of the composite sheet (1) and arranged mutually adjacent, alternating along the transverse direction of the composite sheet (1), **characterised in that** the reticulated bands or strips (2) or meshes and the closed strips or bands (3, 3') longitudinally adjacent along the transverse direction of said composite sheet (1) are made exclusively of paper or fabric;
**in that** each of the bands or strips (2; 3, 3') of said composite sheet (1) includes, on one of the lateral edges thereof, a glued area or portion (4), the glued areas or portions (4) of the adjacent bands or strips (2; 3, 3') mutually overlaying each other to allow mutual bonding of said bands or strips (2; 3, 3') to each other, and
**in that** the composite sheet (1) further includes glued portions (6) arranged along the transverse direction of the composite sheet (1), spaced apart longitudinally, the separation between glued portions (6) varying depending on the size of the bag to be manufactured,
wherein the gluing operations are carried out with the use of a biodegradable glue, such as a natural resin and collagen-based glue.

2. The bag according to claim 1, **characterised in that** each joining between overlayed glued longitudinal areas (4) of the adjacent bands or strips (2; 3, 3') of the composite sheet (1) includes a respective strip (5), also made of paper, applied on said overlay portions between adjacent strips and bonded by gluing through the glue applied on the glued portions (4), which passes through the holes in the overlay portion of the reticulated band or strip (2) or mesh, covering and thereby providing reinforcement to the joining.

3. The bag according to claims 1 and 2, **characterised in that** each closed band or strip (3, 3') includes a window (7) for observing the product inside the bag, surrounded by a glued perimeter area (9).

4. The bag according to claim 3, **characterised in that** it comprises mesh portions (8), also made of paper, such as only paper fibres or paper fibres combined with other plant fibres, said mesh portions (8) being applicable on each respective window of the windows (7) included in the closed bands or strips (3, 3') for closing and protecting the same, and bondable by gluing to the glued perimeter area (9) of the corresponding window.

5. The bag according to claims 2 and 3, **characterised in that** it also includes frame pieces (10) made of paper, with a central opening (10') of the same shape and size as the corresponding window, these frame pieces (10) being intended to be applied on the mesh portions (8) that cover each window, also being attached in their position by virtue of the glued perimeter area (9) and the glue that accesses from said glued perimeter area (9) through the holes in the mesh portion (8) itself.
